# EUROPÄISCHE PATENTANMELDUNG

(11) **EP 0 809 060 A2**
(43) Veröffentlichungstag der Anmeldung: **26.11.1997**
(21) Anmeldenummer: 97108278.9
(22) Anmeldetag: 22.05.1997
(51) Int. Cl.: F16L 3/10

(54) **Gelenkverbindung für Rohrschelle**

(30) Priorität: 24.05.1996 DE 19621098
(71) Anmelder: DIAG DESIGN AG, CH-6300 Zug (CH)
(72) Erfinder:
(74) Vertreter: Schmitt, Hans, Dipl.-Ing.

(57) **Zusammenfassung**

Die Erfindung betrifft eine Gelenkverbindung von zwei Werkstücken, die jeweils zumindest ein Gelenkteil wenigstens eines Gelenkes aufweisen, wobei ein erstes Werkstück ein als Gelenköffnung ausgebildetes erstes Gelenkteil hat und ein zweites Werkstück ein in das erste Gelenkteil einführbares zweites Gelenkteil aufweist, welche Gelenkteile ineinander einführbar und in Gebrauchsstellung mit ein anderverhakbar sind. Für die erfindungsgemäße Gelenkverbindung ist kennzeichnend, daß die Werkstücke an ihren Gelenkteilen unverlierbar miteinander verbindbar sind, daß dazu das zum Einführen an den lichten Querschnitt der Gelenköffnung formangepaßte zweite Gelenkteil in seiner Gebrauchsstellung in eine im Vergleich zur Gelenköffnung abweichende Querschnittsform verformbar ist und/oder daß der (die) Gelenköffnung begrenzende(n) Rand (Ränder) oder Randteil (Randteile) des ersten Werkstückes in Gebrauchsstellung des zweiten Gelenkteiles derart in Richtung zur Gelenköffnung verformbar ist (sind), daß dieser (diese) das zweite Gelenkteil formschlüssig hintergreifen. Bei der erfindungsgemäßen Gelenkverbindung, die in verschiedenen technischen Bereichen einsetzbar ist, sind die Gelenkteile unverlierbar miteinander verbunden, wobei die erfindungsgemäße Gelenkverbindung konstruktiv einfach ausgestaltet, mit geringem Aufwand herstellbar und das Gelenk ästhetisch ansprechend ist.

## Beschreibung

Die Erfindung betrifft eine Gelenkverbindung von zwei randseitig aneinander angrenzenden Werkstücken, die jeweils zumindest ein Gelenkteil wenigstens eines Gelenkes aufweisen, wobei ein erstes Werkstück ein als Gelenköffnung ausgebildetes erstes Gelenkteil hat und ein zweites Werkstück ein in das erste Gelenkteil einführbares zweites Gelenkteil aufweist, welche Gelenkteile ineinander einführbar und in Funktionsstellung miteinander verhakbar sind.

Aus dem DE-GM 89 02 336 ist bereits ein Gelenk der eingangs erwähnten Art bekannt, das zwei randseitig aneinander angrenzende Schellenbügel gelenkig miteinander verbindet, welche als Werkstücke oder Bestandteile einer Gelenkschraubrohrschelle ausgebildet sind. Während ein als erstes Werkstück zu bezeichnender Schellenbügel ein erstes Gelenkteilaufweist, das als etwa T-förmige Gelenköffnungausgebildet ist, ist an dem als zweites Werkstück dienenden anderen Schellenbügel ein Querriegel als zweites Gelenkteil vorgesehen. Dieses zweite Gelenkteil, das in die Gelenköffnung einführbar ist, bis es die Öffnungsränder formschlüssig hintergreift, ist mit dem zweiten Schellenbügel über eine stegförmige Querschnittsverengung ebenfalls T-förmig verbunden.

Um die vorbekannte Gelenkschraubrohrschelle auch mit nur einer Hand bei der Montage und Demontage handhaben zu können, sind deren Schellenbügel über das Gelenk verbunden. Bei ungünstiger Handhabung dieser Rohrschelle besteht jedoch die Gefahr, daß sich die Schellenbügel an ihren Gelenkteilen lösen. Dies gilt insbesondere wenn die Rohrschelle keine Schalldämmeinlage hat, welche mithilft, die Schellenhälften zusammen zu halten. Zudem stehen die Gelenkteile nach außen vor, was das äußere Erscheinungsbild dieser vorbekannten Rohrschelle beeinträchtigt und vor allem die Gefahr von Verletzungen beinhaltet, wenn z.B. in Kindergärten oder Wohnräumen Menschen mit freiliegenden Rohrleitungen und Rohrschellen in Berührung kommen.

Man hat daher auch bereits eine Rohrschelle geschaffen, bei der die Schellenbügel über eine Lasche miteinander verbunden sind, die mittels Schweißpunkten an den Schellenbügeln befestigt ist (vgl. DE-PS 29 14 080). Diese Verbindungslasche besteht aus einem unlegierten Kaltarbeitsstahl, der sich beispielsweise zum Öffnen der Rohrschelle leicht aufbiegen läßt. Das Anbringen der Schweißpunkte und das Befestigen der Verbindungslasche an den Schellenbügel ist jedoch mit einem nicht unerheblichen Aufwand verbunden, zumal auch hier ein deutlicher Spalt zwischen den aneinander angrenzenden Bügelenden der Schellenbügel sichtbar bleibt.

Da auch in anderen technischen Bereichen häufig zwei benachbarte Werkstücke auf einfache Weise gelenkig verbunden werden müssen, besteht daher die Aufgabe, eine Gelenkverbindung der eingangs erwähnten Art zu schaffen, deren Gelenkteile unverlierbar miteinander verbindbar sind, wobei die erfindungsgemäße Gelenkverbindung konstruktiv einfach ausgestaltet und mit geringem Aufwand herstellbar und das Gelenk ästhetisch ansprechend sein soll.

Die erfindungsgemäße Lösung dieser Aufgabe besteht bei der Gelenkverbindung der eingangs erwähnten Art insbesondere darin, daß die Werkstücke an ihren Gelenkteilen unverlierbar miteinander verbindbar sind, daß dazu das zum Einführen an den lichten Querschnitt der Gelenköffnung formangepaßte zweite Gelenkteil in seiner Gebrauchsstellung in eine im Vergleich zur Gelenköffnung abweichende Querschnittsform verformbar ist und/oder daß der (die) Gelenköffnung begrenzende(n) Rand (Ränder) oder Randteil (Randteile) des ersten Werkstückes in Gebrauchsstellung des zweiten Gelenkteiles derart in Richtung zur Gelenköffnung vorformbar ist (sind), daß dieser (diese) das zweite Gelenkteil formschlüssig hintergreifen. Dabei können die die Gelenköffnung begrenzenden Ränder zum Einführen des zweiten Gelenkteiles abgewinkelt sein. Unter Gelenköffnung werden hier solche Öffnungen verstanden, die durch einen offenen oder auch geschlossenen Rand begrenzt sind.

Um die einfache Handhabbarkeit der erfindungsgemäßen Gelenkverbindung zu begünstigen, ist es vorteilhaft, wenn das zweite Gelenkteil einen stegförmigen und in das erste Gelenkteil einführbaren Bereich oder Teilbereich hat.

Eine bevorzugte Ausführungsform gemäß der Erfindung betrifft eine Gelenkverbindung, deren zweites Gelenkteil einen, über zumindest einen Verbindungssteg oder wenigstens eine vorzugsweise stegförmige Querschnittsverengung mit dem zweiten Werkstück verbundenen Querriegel aufweist, und bereichsweise mit seiner Querschnittsverengung in das erste Gelenkteil einführbar ist.

Bei dem erfindungsgemäßen Gelenk wird eine unverlierbare Verbindung zwischen den Gelenkteilen durch Verformen des als Querriegel dienenden Gelenkteiles und/oder des die Gelenköffnung begrenzenden Öffnungsrandes erreicht. Da die Gelenköffnung vor dem Verformen ihres Öffnungsrandes vergleichsweise groß ausgestaltet ist, bzw. da das als Querriegel dienende Gelenkteil zum Einführen an den lichten Querschnitt der Gelenköffnung formangepaßt ist, lassen sich die Gelenkteile leicht ineinander einfügen, um sie anschließend durch Verformen bzw. Umbiegen entsprechender Materialbereiche unverlierbar miteinander zu verbinden. Dabei können die Werkstücke beispielsweise aus einem leicht verformbaren Material oder auch aus einem insbesondere unter Wärmeeinfluß verformbaren Kunststoff bestehen.

Bevorzugt wird eine Ausführungsform bei der die Gelenköffnung eine von einer Geraden abweichende Öffnungs-Mittellinie hat. Da bei dieser Ausführungsform der Querriegel oder die Öffnungsränder in eine abgeflachtere Position verformt werden, kann das Gelenk flach und praktisch kaum sichtbar oder ästhetisch zumindest nicht störend ausgestaltet werden.

Möglich ist allerdings auch, daß die Gelenköffnung eine etwa gerade Öffnungs-Mittellinie hat. Dabei kann es zweckmäßig sein, wenn der Querriegel nach dem Einführen des zweiten Gelenkteiles in die Gelenköffnung des ersten Gelenkteiles in einen von einer Geraden abweichenden Querschnitt verformbar ist.

Es ist vorteilhaft, wenn die Gelenköffnung und der Querriegel des zweiten Gelenkteiles zum Einführen einen formangepaßten und jeweils etwa U- oder V-förmigen Querschnitt aufweisen. Durch Umbiegen der freien Riegelenden des zunächst etwa U- oder V-förmigen Querriegels in eine etwa T-Form ist dieser besonders sicher und fest in der ursprünglich formangepaßten Gelenköffnung gehalten.

Um eine möglichst belastbare und dauerhafte Verbindung zwischen den Werkstücken zu erreichen, ist es besonders vorteilhaft, wenn das erste Gelenkteil eine oder mehrere Abkröpfungen oder sichtseitige Rücksprünge aufweist, welche in Funktionsstellung der Gelenkverbindung von dem Querriegel des zweiten Gelenkteils formschlüssig hintergriffen wird (werden).

Zusätzlich oder stattdessen kann das zweite Gelenkteil in seinem an das zweite Werkstück angreifenden stegförmigen Teilbereich eine oder mehrere Abkröpfungen oder dergleichen Rücksprünge aufweisen, welche in Funktionsstellung der Gelenkverbindung den die Gelenköffnung begrenzenden und zum freien Ende des ersten Gelenkteils orientierten Randbereich des ersten Werkstücks formschlüssig hintergreift (hintergreifen).

Da bei einer auf die Werkstücke einwirkenden Belastung, deren Belastung den Querriegel des zweiten Gelenkteils hinter der oder den Abkröpfung(en) oder dergleichen Rücksprüng(e) in Richtung des anderen Werkstücks preßt, bzw. den oder die Rücksprüng(e) des zweiten Gelenkteils in die Gelenköffnung des ersten Gelenkteils preßt, der Formschluß dieser Gelenkverbindung noch zunimmt, hat diese bevorzugte Ausführungsform eine geradezu selbstsichernde Wirkung.

Während einer Schwenkbewegung der über die Gelenkverbindung miteinander verbundenen Werkstücke dienen zudem die Abkröpfungen oder dergleichen Rücksprünge gleichzeitig als gegenseitige Abstützungen oder Führungen für die Gelenkteile, indem sie eine Art Dreh- oder Schwenkachse bilden, bei denen die Gelenkteile gegenseitig aneinander vorbeigleiten.

Der Biegevorgang kann besonders einfach durchgeführt werden, wenn die freien Stegenden des zum Einführen U- oder V-förmigen Querriegels jeweils nach außen abgewinkelt sind.

Um auch in der Vormontagestellung eine zwar gelenkige, jedoch stabile Verbindung zwischen den Werkstücken zu schaffen, ist es zweckmäßig, wenn die Gelenköffnung des ersten Gelenkteiles und das zweite Gelenkteil im Bereich seiner Querscnnittsverengung oder seines (seiner) stegförmigen Teilbereiche(s) derart formangepaßt sind, daß die Gelenkteile im wesentlichen ohne seitliches Spiel ineinander geführt sind.

Bevorzugt wird eine Ausführungsform, bei der der Querriegel zum Sichern des zweiten Gelenkteiles in einen etwa geraden Querschnitt verformbar ist. Da die Gelenköffnung bei dieser Ausführungsform eine von einer Geraden abweichende Querachse hat, ist der demgegenüber etwa gerade verformte Querriegel in der Gelenköffnung bzw. an der Abkröpfung besonders stabil und dauerhaft gehalten.

Bei einer Weiterbildung gemäß der Erfindung ist vorgesehen, daß am ersten Werkstück im Bereich der Gelenköffnung zumindest eine Material- oder Sicherungslasche vorgesehen ist, welche zum Sichern des zweiten Gelenkteiles in der Gelenköffnung von einer abgewinkelten Offenstellung in Richtung zur Gelenköffnung in eine Sicherungsstellung verformbar ist. Vor dem Einführen des zweiten Gelenkteiles in die Gelenköffnung hat diese einen besonders großen Öffnungsquerschnitt, wenn die von der Gelenköffnung begrenzte Material- oder Sicherungslasche abgewinkelt ist. Nach dem Einführen des zweiten Gelenkteiles kann diese Sicherungslasche in Richtung zur Gelenköffnung gebogen werden, wodurch sich der Öffnungsquerschnitt derart verändert, daß das als Querriegel dienende Gelenkteil darin unverlierbar gehalten ist.

Bei einer anderen Ausführungsform gemäß der Erfindung hat das zweite Gelenkteil einen Querriegel, der über mehrere Stege mit dem zweiten Werkstück verbunden ist; auch dieses zweite Gelenkteil ist in das erste Gelenkteil einführbar. Das bisher Gesagte gilt sinngemäß auch für diese Ausführungsform.

Eine Weiterbildung gemaß der Erfindung sieht vor, daß die Werkstücke als Schellenbügel einer Rohrschelle ausgebildet sind.

Vorteilhaft ist es, wenn die gelenkseitigen Enden der Werkstücke in Gebrauchsstellung des Gelenkes auf derselben Seite dieser Werkstücke angeordnet sind und in dieser Lage überlappend aneinander anliegen. Dabei sieht eine ästhetisch besonders ansprechende Ausführungsform gemäß der Erfindung vor, daß die gelenkseitigen Enden der Werkstücke auf der der Sichtseite abgewandten Seite der Werkstücke angeordnet sind. Das Gelenk kann bei dieser Ausführungsform praktisch unsichtbar hinter den Werkstücken auf deren der Sichtseite abgewandten Seite angeordnet werden.

Bei dieser Ausführungsform stehen auch die Gelenkteile nicht mehr störend nach außen vor. Eine Verletzungsgefahr wird somit praktisch ausgeschlossen. Dies gilt insbesondere für den Fall, wo das Gelenk für Rohrschellen eingesetzt wird, welche beispielsweise in Kindergärten oder Wohnräumen montiert sind, wo Menschen mit Rohrleitungen und Rohrschellen in Kontakt kommen können. Ein weiterer Vorteil dieser Rohrschelle zeigt sich auch in Bezug auf die Wärme- und/oder Schallisolation einer Rohrleitung: da es keine nach außen vorstehende Gelenkteile hat, werden die Isolationsarbeiten nicht erschwert und die Isolationswirkung wird in dem Bereich des Gelenks nicht vermindert.

Weist zumindest eines der beiden Werkstücke wenigstens im Gelenkbereich beidseits einen radial nach innen abgewinkelten Schellenrand auf, und ist der dieses Werkstück überlappende Teil des anderen Werkstücks (der Querriegel des zweiten Gelenkteiles bzw. die die Gelenköffnung aufweisende Verlängerung des ersten Gelenkteiles) innerhalb des zwischen diesen Schellenrändern vorgesehenen Abstandes bemessen, werden die aneinander angrenzenden Schellenenden praktisch spielfrei aneinander gehalten und bei einer Schwenkbewegung des Gelenkes zusätzlich ineinander geführt. Dabei ist es jedoch vorteilhaft, wenn die Schellenenden zumindest in ihrem gelenkseitigen Endbereich vorzugsweise jeweils beidseits einen radial nach innen abgewinkelten Schellenrand aufweisen. Dabei sieht eine bevorzugte Ausführungsform gemäß der Erfindung vor, daß zwischen der Rohrschelle und einem von ihr umgriffenen Rohr eine insbesondere gummielastische Schelleneinlage vorgesehen ist, welche zumindest eines der beiden Gelenkteile beaufschlagt, und daß die Schelleneinlage vorzugsweise zwischen den nach innen abgewinkelten Schellenrändern der Schellenenden angeordnet ist. Durch die Druckbeaufschlagung zumindest eines der beiden Gelenkteile wirkt auf dieses diese Gelenkteil(e) eine Rückstellkraft ein, welche das Gelenk aus einer Gelenk-Zwischenposition praktisch automatisch in seine Gebrauchsstellung bewegt.

Zur Schalldämmung ist es vorteilhaft, wenn die Schelleneinlage in Form und/oder Material als Schalldämmeinlage ausgebildet ist.

Eine weitere Ausführungsform gemäß der Erfindung sieht vor, daß die gelenkseitigen Enden der Werkstücke auf der Sichtseite der Werkstücke nach außen vorstehen und daß insbesondere die gelenkseitigen Schellenenden einer Rohrschelle radial nach außen vorstehen. Bei einer Rohrschelle, die aus zwei Schellenhälften besteht, welche an ihrem dem Gelenk abgewandten Schellenenden einen radial nach außen vorstehenden Befestigungsflansch zum Verschrauben dieser Schellenenden aufweisen, kann mittels der ebenfalls nach außen vorstehenden gelenkseitigen Schellenenden eine im wesentlichen symmetrische Ausgestaltung der Rohrschelle erreicht werden, welche auch hohen ästhetischen Ansprüchen genügt.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- **Fig. 1**: ein Gelenk, welches die zwei Schellenhälften einer Rohrschellemiteinander verbindet, wobei die Schellenhälften an ihren dem Gelenk abgewandten Schellenenden zum Festklemmen eines Rohres mittels einer Schraubverbindung geschlossen werden,
- **Fig. 2**: das Gelenk aus Figur 1 in einer Draufsicht,
- **Fig. 3**: das Gelenk aus Figur 1 und 2 in einem Längsschnitt in Schnittebene III-III aus Figur 2,
- **Fig. 4**: eine der Schellenhälften der Rohrschelle aus Figur 1 in einem Querschnitt in Schnittebene IV-IV aus Figur 2,
- **Fig. 5**: eine Schellenhälfte der Rohrschelle aus Figur 1 mit einem als Gelenköffnung ausgebildeten Gelenkteil in einer Draufsicht,
- **Fig. 6**: die Schellenhälfte aus Figur 5 in einem Längsschnitt entlang der Mittellinie,
- **Fig. 7**: die Schellenhälfte aus Figur 5 und 6 in einer Stirnansicht,
- **Fig. 8**: eine Schellenhälfte der Rohrschelle aus Figur 1 in einer Draufsicht, wobei die Schellenhälfte mit einem als Querriegel ausgebildeten Gelenkteil verbunden ist,
- **Fig. 9**: die Schellenhälfte aus Figur 8 in einem Längsschnitt entlang der Mittellinie,
- **Fig. 10**: die Schellenhälfte aus Figur 8 und 9 in einer Stirnansicht,
- **Fig. 11**: eine Rohrschelle, ähnlich der aus Figur 1, wobei die Rohrschelle hier in einem von der Schraubverbindung beabstandeten Schellenbereich zusätzlich eine am Schellenband befestigte Mutter zum Einschrauben einer Gewindestange aufweist,
- **Fig. 12**: das Gelenk einer ähnlich wie in Figur 11 ausgebildeten Rohrschelle, wobei dessen Gelenkteile hier radial nach außen vorstehen,
- **Fig. 13**: eine Schellenhälfte der Rohrschelle aus Figur 12 in einem Querschnitt entlang der Schnittlinie XIII-XIII aus Figur 12,
- **Fig. 14**: das als Querriegel ausgebildete Gelenkteil des Gelenks aus Figur 12 in einer Draufsicht,
- **Fig. 15**: das Gelenkteil aus Figur 14 in einer Seitenansicht,
- **Fig. 16**: das Gelenkteil aus Figur 14 und 15 in einer Stirnansicht,
- **Fig. 17**: das als Gelenköffnung ausgebildete Gelenkteil des Gelenks aus Figur 12 in einer Draufsicht,
- **Fig. 18**: das Gelenkteil aus Figur 17 in einem Längsschnitt entlang der Mittellinie,
- **Fig. 19**: das Gelenkteil aus Figur 17 und 18 in einer Stirnansicht auf die in Figur 17 rechte Seite des Schellenendbereiches,
- **Fig. 20**: ein Gelenk, dessen Gelenkteile jeweils an einer der Schellenhälften einer Rohrschelle vorgesehen sind, wobei ein erstes Gelenkteil als Gelenköffnung ausgebildet ist, während ein zweites Gelenkteil einen in das erste Gelenkteil einführbaren stegförmigen Teilbereich hat,
- **Fig. 21**: das Gelenk aus Fig. 20 in einem Längsschnitt entlang der Mittellinie,
- **Fig. 22**: das die Gelenköffnung aufweisende erste Gelenkteil aus den Fig. 20 und 21 in einer Draufsicht,
- **Fig. 23**: das Gelenkteil auf Fig. 22 in einem Längsschnitt entlang der Mittellinie,
- **Fig. 24**: das zweite Gelenkteil aus Figur 20 in einer Draufsicht, und
- **Fig. 25**: das Gelenkteil aus Figur 24 in einem Längsschnitt entlang der Mittellinie.

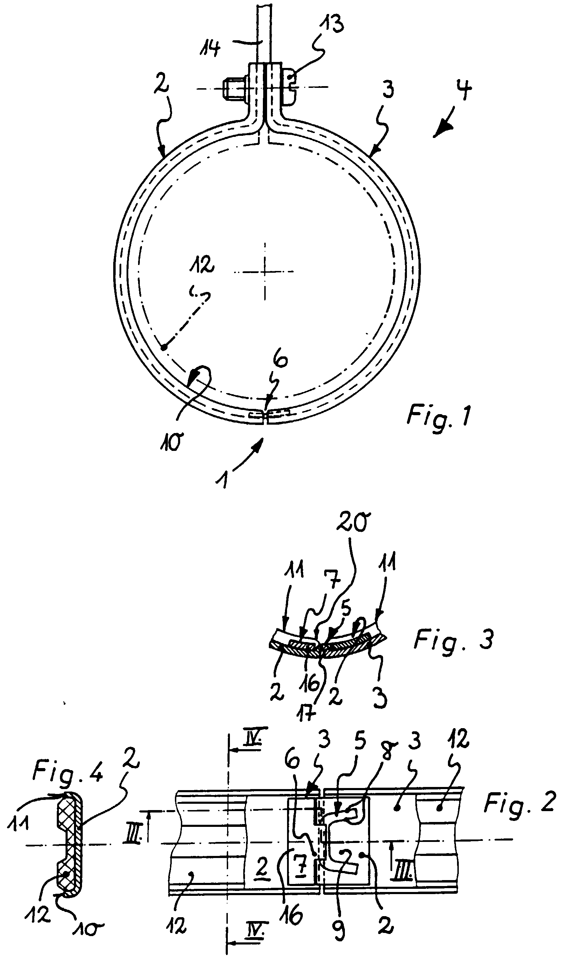

In den Figuren 1 bis 19 ist in verschiedenen Ausführungen ein Gelenk 1 dargestellt, das zur gelenkigen Verbindung von zwei randseitig aneinander angrenzenden Werkstücken 2, 3 dient. Diese Werkstücke 2, 3 sind hier als Schellenbügel 2, 3 ausgestaltet, welche jeweils als Schellenhälften eine Rohrschelle 4 bilden. Von den Werkstücken 2, 3 weist ein erstes Werkstück 2 (erster Schellenbügel 2) ein als Gelenköffnung 5 ausgebildetes erstes Gelenkteil auf, während der als zweites Werkstück bezeichnete Schellenbügel 3 über eine stegförmige Querschnittsverengung 6 mit dem Querriegel 16 eines zweiten Gelenkteiles 7 verbunden ist. Dabei ist das zweite Gelenkteil 7 bis zur bereichsweise mit der Querschnittsverengung 6 in die Gelenköffnung 5 einführbar, so daß in der Gebrauchsstellung des Gelenkes 1 die Öffnungsränder 8 der Gelenköffnung 5 den Querriegel 16 des zweiten Gelenkteiles 7 hintergreifen.

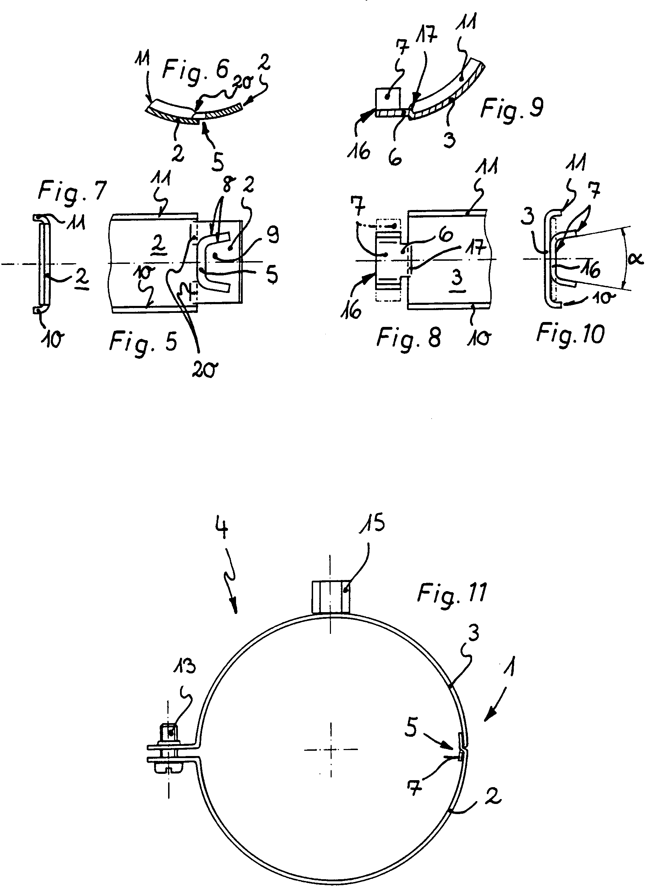

In den beiden Ausführungsbeispielen gemäß den Figuren 1 bis 11 weist das erste Gelenkteil 5 zwei Abkröpfungen oder dergleichen Rücksprünge 20 auf (vgl. Fig. 3 und 6). Diese Abkröpfungen oder Rücksprünge 20 werden in Funktionsstellung der Gelenkverbindung von dem Querriegel 16 des zweiten Gelenkteils 7 formschlüssig hintergriffen. Wie beispielsweise aus Fig. 3 und 9 deutlich wird, weist auch das zweite Gelenkteil 7 an seiner stegförmigen Querschnittsverengung 6, welche den Querriegel 16 mit dem Schellenbügel 3 verbindet, eine Abkröpfung oder dergleichen sichtseitigen Rücksprung 17 auf. In der in Figur 3 dargestellten Gebrauchsstellung hintergreift dieser Rücksprung 17 den die Gelenköffnung 5 begrenzenden und zum freien Ende des ersten Gelenkteiles 5 orientierten Randbereich des Schellenbügels 2 formschlüssig. Diese Rücksprünge 17, 20 sorgen für eine sichere und formschlüssige Verbindung der Gelenkteile 5, 7. Da bei einer Belastung der Rohrschelle 4, z.B. durch das Festklemmen eines Rohres, der Querriegel 16 hinter den Rücksprüngen 20 in Richtung zum anderen Schellenbügel gepreßt wird, bzw. der Rücksprung 17 zusätzlich in die Gelenköffnung 5 gepreßt wird, und der Formschluß dieser Gelenkverbindung zunimmt, hat das Gelenk 1 eine geradezu selbstsichernde Wirkung. Zudem können die Rücksprünge 17, 20 als Abstützungen/Führungsflächen für ihre Gelenkpartnerstücke dienen, wenn die über die Gelenkverbindung verbundenen Werkstücke 2, 3 verschwenkt werden.

Um die Schellenbügel 2, 3 an ihren Gelenkteilen 5, 7 unverlierbar miteinander verbinden zu können, hat die Gelenköffnung 5 eine von einer Geraden abweichende Öffnungs-Mittellinie. In den Figuren weist die in der Verlängerung des ersten Schellenbügels 2 vorgesehene Gelenköffnung 5 einen V- oder vorzugsweise U-förmigen lichten Umriß auf. Wie insbesondere aus einem Vergleich der Figuren 5 und 10 deutlich wird, ist der Querriegel 16 des zweiten Gelenkteiles 7 zum Einführen an den lichten Querschnitt der Gelenköffnung 5 formangepaßt.

Nach dem Einführen kann der Querriegel 16 des zweiten Gelenkteiles 7 in seiner Gebrauchsstellung in eine im Vergleich zur Gelenköffnung 5 abweichende, vorzugsweise abgeflachte Querschnittsform verformt werden, wozu - wie in Figur 2 dargestellt ist - die freien Steg- oder Riegelenden des ebenfalls V- oder vorzugsweise U-förmigen Querriegels 16 umgebogen werden. Um das Geradebiegen der Riegelenden möglichst einfach zu gestalten, sind diese freien Riegelenden des Querriegels 16 jeweils nach außen abgewinkelt, wobei beispielsweise ein Winkel α von etwa 20° (vgl. Fig. 10) zwischen diesen noch unverformten Stegenden gewählt werden kann.

Dabei ist es möglich, die ineinander eingeführten Gelenkteile 5, 7 vor dem Geradebiegen des Querriegels 16 noch so gegeneinander zu verdrehen, als ob die Rohrschelle 4 geschlossen wird. In dieser Position geht das Geradebiegen besonders einfach, indem der erste Schellenbügel 2 abgestützt wird und die freien Riegelenden des Querriegels 16 gegen die Schelleninnenseite des ersten Schellenbügels 2 gepreßt werden.

In der Figur 2 und strichliniert auch in den Figuren 8 und 10 ist der Querriegel 16 nach dem Umbiegen seiner Riegelenden in der abgeflachten Gebrauchsstellung dargestellt, in der die Schellenbügel 2, 3 gelenkig, aber unverlierbar miteinander verbunden sind.

Zur Herstellung dieser unverlierbaren Verbindung ist es möglich, daß zusätzlich oder alternativ die die Gelenköffnung 5 begrenzenden und zum Einführen des Querriegels 16 abgewinkelten Ränder 8 des ersten Schellenbügels 2 in Gebrauchsstellung des zweiten Gelenkteiles 7 derart in Richtung zur Gelenköffnung 5 verformbar sind, daß diese Ränder 8 anschließend das zweite Gelenkteil 7 im Bereich des Querriegels 16 formschlüssig hintergreifen. Dazu kann die von der U- oder V-förmigen Gelenköffnung 5 begrenzte Sicherungslasche 9 des ersten Werkstückes 2 zum Einführen des zweiten Gelenkteiles 7 zunächst abgewinkelt sein, wodurch die Gelenköffnung 5 einen Umriß hat, durch den selbst ein Querriegel 16 einführbar ist, welcher eine im Vergleich zum Öffnungsquerschnitt der Gelenköffnung 5 abweichende Querschnittsform, beispielsweise seine gestreckte oder gerade Querschnittsform gemäß Figur 2 aufweist. Allerdings läßt sich ein zunächst U- oder V-förmiger Querriegel 16 am leichtesten einführen, bevor er in seine gerade Querschnittsform umgebogen, die Sicherungslasche zur Gelenköffnung verformt und die unverlierbare Verbindung dieser Gelenkteile 2, 3 hergestellt wird.

Die gelenkseitigen und mit den Gelenkteilen 5, 7 einstückig verbundenen Schellenbügel 2, 3 sind in Gebrauchsstellung des Gelenkes 1 auf derselben Seite dieser Werkstücke 2, 3 angeordnet. Dabei sind diese gelenkseitigen Enden bei der in Figur 1 bis 10 dargestellten Rohrschelle 4 auf der der Sichtseite abgewandten Seite der Werkstücke 2, 3 angeordnet. Das Gelenk 1 ist bei der Rohrschelle 4 gemäß den Figuren 1 bis 10 somit praktisch nicht zu sehen, sondern wird durch die Außenseite der randseitig aneinander angrenzenden Schellenbügel 2, 3 überdeckt. Vorzugsweise ist zudem die Form der Gelenkteile im Endmontagezustand der Kreisform der Schellenbügel angepaßt. Die in den Figuren 1 bis 10 dargestellte Rohrschelle 4 kommt daher auch hohen ästhetischen Anforderungen entgegen, wobei die Gelenkverbindung ihrer Schellenbügel 2, 3 auch hohen Belastungen standhält. Durch das formschlüssige Eingreifen der am ersten Gelenkteil vorgesehenen Abkröpfungen 20 mit dem Querriegel 16, bzw. der am zweiten Gelenkteil 7 vorgesehenen Abkröpfung 17 in die Gelenköffnung 5 des ersten Gelenkteiles, kann der Abstand zwischen den Gelenkteilen 5, 7 so bemessen werden, daß im Verbindungsbereich der Schellenbügel 2, 3 praktisch kein wesentlicher Spalt sichtbar ist.

Es kann vorteilhaft sein, wenn der U-Quersteg der U-förmigen Gelenköffnung 5 einerseits und die Querschnittsverengung 6 des zweiten Gelenkteiles 7 andererseits derart formangepaßt sind, daß die Gelenkteile 5, 7 im wesentlichen ohne seitliches Spiel ineinander geführt sind.

Eine zusätzliche Seitenführung bei kleinem Öffnungswinkel der Rohrschelle wird durch folgenden Mechanismus erreicht:

Wie insbesondere aus Figur 7 und 9 deutlich wird, weisen die Schellenbügel 2, 3 beidseits jeweils einen radial nach innen abgewinkelten Schellenrand 10, 11 auf. Da der Querriegel 16 in gestreckter oder gerader Gebrauchsstellung etwa an den Innenabstand der Schellenränder 10, 11 des ersten Schellenbügels 2 angepaßt ist, und da auch die die Gelenköffnung 5 aufweisende Verlängerung des ersten Schellenbügels 2 an den Innenabstand der Schellenränder 10, 11 des zweiten Schellenbügels 3 angepaßt ist, weist das Gelenk 1 praktisch kein seitliches Spiel auf. Darüber hinaus wird, insbesondere durch den zwischen den Schellenrändern 10, 11 geführten Querriegel 16, eine Schwenkführung der Gelenkteile 5, 7 während einer Schwenkbewegung der Schellenbügel 2, 3 erreicht. Dadurch kann insbesondere das Zusammenschrauben der beiden Schellenhälften auf der dem Gelenk gegenüberliegenden Seite wesentlich erleichtert werden.

Wie aus den Figuren 2 und 8 deutlich wird, bilden die mit dem Schellenbügel 3 einstückig verbundene Querschnittsverengung 6 sowie der am Schellenende vorgesehene Querriegel 16 in Draufsicht praktisch eine T-Form. Die V- oder vorzugsweise U-förmige Gelenköffnung 5 weist mit den freien Stegenden ihrer U-Form zum Schellenende, wie aus Figur 5 ersichtlich ist.

Aus Figur 1 wird deutlich, daß zwischen der Rohrschelle 4 und einem von ihr umgriffenen, hier aber nicht weiter dargestellten Rohr eine gummielastische Schelleneinlage 12 vorgesehen ist, die mit Abstand vom Gelenk 1 innenseitig an den Schellenbügeln 2, 3 befestigt ist. Die Schelleneinlage 12 beaufschlagt u.a. die Endbereiche der beiden Schellenbügeln 2, 3, d.h. den Querriegel 16 des zweiten Gelenkteils 7 und den Gelenkteil der Gelenköffnung 5, derart, daß das Gelenk 1 in einer Gelenk-Zwischenposition praktisch durch die Rückstellkraft der gummielastischen Schelleneinlage 12 in die in Figur 1 dargestellte geschlossene Gebrauchsstellung der Rohrschelle 4 bewegt wird. Vorteilhaft ist es, wenn die vorzugsweise zwischen den nach innen abgewinkelten Schellenrändern 10, 11 der Schellenbügel 2, 3 angeordnete Schelleneinlage 12 gleichzeitig auch als Schalldämmeinlage ausgebildet ist. Bei der Rohrschelle 4 gemäß den Figuren 1 bis 10 ist die Dicke der Schelleneinlage 12 dazu so gewählt, daß genügend Abstand zwischen der Rohroberfläche einerseits und den nach innen gerichteten Schellenrändern 10, 11 der Rohrschelle 4 andererseits verbleibt, damit keine Schallbrücke entsteht. Durch die Schelleneinlage 12 wird das Gelenk auch innenseitig praktisch unsichtbar überdeckt. Die Schelleneinlage 12 schützt zudem die Rohroberfläche gegen ein Zerkratzen durch die Gelenkteile.

In Figur 1 ist dargestellt, daß die dem Gelenk 1 abgewandten und radial nach außen abgewinkelten Schellenenden der Schellenbügel 2, 3 jeweils als Befestigungsflansch ausgebildet sind, die zum Festklemmen des Rohres mittels einer Schraubverbindung 13 verbunden werden können. Bei der Rohrschelle gemäß den Figuren 1 bis 10 greift an der Schraubverbindung 13 auch ein Verbindungselement 14 an, mit dem die Rohrschelle 4 gemäß den Figuren 1 bis 10 am Baukörper befestigt werden kann.

Bei der in Figur 11 dargestellten Rohrschelle 4 ist demgegenüber am Schellenbügel 3 eine Mutter 15 angeschweißt, die mit Abstand von den Schellenenden der Schellenbügel 2, 3 angeordnet ist. Abgesehen davon, daß die in Figur 11 dargestellte Rohrschelle 4 keine Schalldämmeinlage und auch keine radial nach innen umgebogene Schellenränder 10, 11 aufweist, ist sie ansonsten wie die Rohrschelle 4 gemäß den Figuren 1 bis 10 ausgebildet.

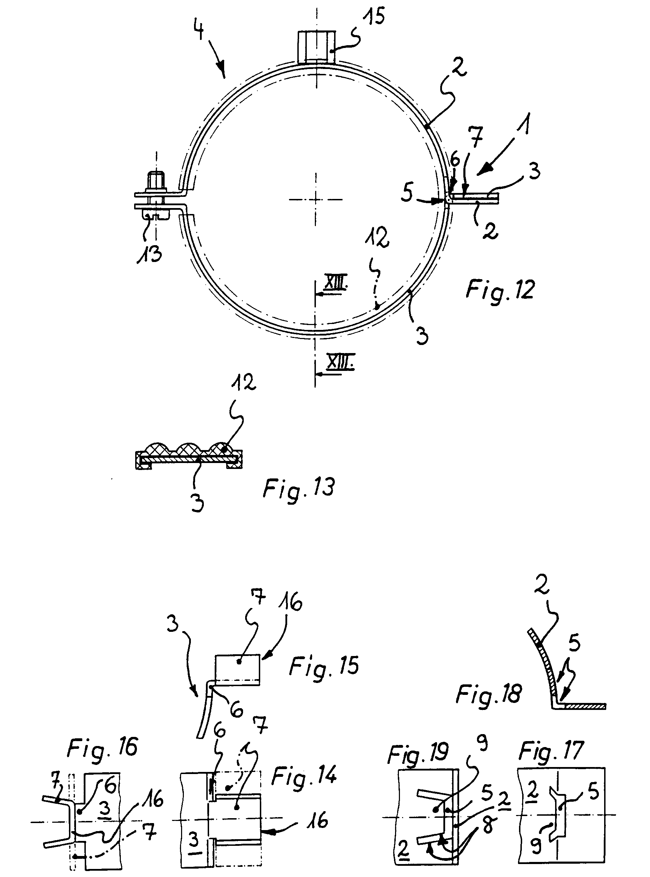

Die in den Figuren 12 bis 19 dargestellte Rohrschelle 4 weist ein Gelenk 1 auf, dessen Gelenkteile 5, 7 radial nach außen abgewinkelt sind. Auch hier sind die Gelenkteile entweder als etwa V- oder vorzugsweise U-förmige Gelenköffnung 5 ausgebildet oder weisen einen Querriegel 16 auf. Da im geöffneten Zustand der Schellenbügel 2, 3 die Gelenkteile 5, 7 nicht nach innen zum Schelleninneren vorstehen und somit auch am Rohr nicht anstoßen können, wird eine Beschädigung des von der Rohrschelle 4 umgriffenen Rohres in Folge der Gelenkteile 5, 7 mit Sicherheit vermieden. Die gelenkseitigen Enden der Schellenbügel 2, 3, die bei der Rohrschelle 4 gemäß Figur 12 bis 19 auf der Sichtseite der Schellenbügel 2, 3 nach außen vorstehen, sind praktisch spiegelbildlich zu den gegenüberliegenden, dem Gelenk 1 abgewandten Schellenenden dieser Schellenbügel 2, 3 angeordnet. Das Gelenk 1 einerseits und der auf der gegenüberliegenden Seite der Rohrschelle 4 gemäß Figur 12 bis 19 angeordnete Schellenverschluß andererseits bilden somit jeweils ein optisches Gegengewicht zueinander.

Aus den Figuren 12 und 13 wird deutlich, daß bei der in diesen Figuren dargestellten Rohrschelle 4 die Schellenränder nicht - wie in den Figuren 1 bis 10 - nach innen eingebogen sind, sondern daß stattdessen die Schelleneinlage 12 hier einen C-förmigen Querschnitt hat, mit dem sie die gegenüberliegenden Ränder der bandförmigen Schellenbügel 2, 3 umgreift. Dabei ist der profilierte Mittelsteg der C-Form nach innen zum Rohr hin orientiert.

Auch die Schellenbügel 2, 3 lassen sich an ihren Gelenkteilen 5, 7 sehr leicht miteinander verbinden. Die Gelenkteile 5, 7 werden dazu in einer einfachen Translationsbewegung ineinander gefügt, um anschließend die Riegelenden des Querriegels 16 und/oder die von der Gelenköffnung 5 umgrenzte Sicherungslasche 9 derart umzubiegen, daß das zweite Gelenkteil 7 im Bereich der Querschnittsverengung 6 unverlierbar in der Gelenköffnung 5 gehalten ist.

Die nach außen vorstehenden Gelenkteile 5, 7 bei der Rohrschelle gemäß Figur 12 bis 19 können natürlich auch erheblich kürzer ausgestaltet werden, wie dies etwa in Figur 12 dargestellt wurde. Auch ist es möglich, die Gelenkteile 5, 7 im Vergleich zu den angrenzenden Teilbereiche der Schellenbügel 2, 3 etwas schmaler auszugestalten, damit die C-förmige Schelleneinlage 12 einen ungestörten Verlauf längs der Schellenbügel 2, 3 hat. Stattdessen könnte aber auch die Schelleneinlage 12 im Bereich des Gelenkes 1 an den freien Enden ihrer C-Form entsprechende Einschnitte aufweisen, welche die ineinander greifenden Gelenkteile 5, 7 aufnehmen.

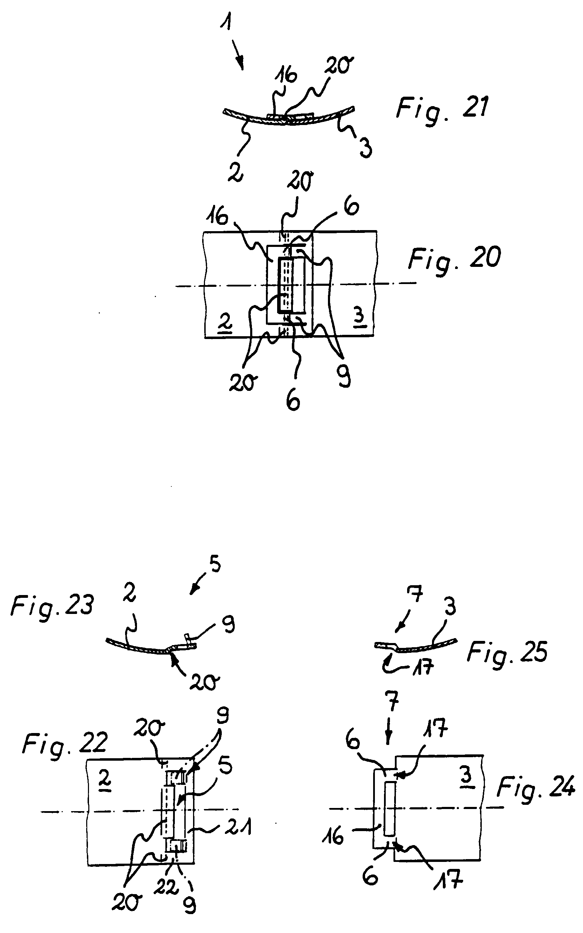

In den Figuren 20 bis 25 ist ein Gelenk 1 dargestellt, dessen Gelenkteile 5, 7 ebenfalls jeweils an einer der Schellenhälften 2, 3 einer hier nicht weiter dargestellten Rohrschelle vorgesehen sind. Während die eine Schellenhälfte 2 ein als Gelenköffnung ausgebildetes erstes Gelenkteil 5 hat, ist am benachbarten Schellenende der anderen Schellenhälfte 3 ein zweites Gelenkteil 7 vorgesehen, welches einen stegförmigen und in das erste Gelenkteil einführenden Teilbereich 6 aufweist. Dieser stegförmige und in das erste Gelenkteil 2 einführbare Teilbereich 6 besteht aus zwei Stegen, welche die zweite Schellenhälfte 3 mit einem Querriegel 16 verbinden.

Ähnlich wie bei dem in Figur 3 dargestellten Gelenk weist auch das beispielsweise in den Figuren 21 und 23 abgebildete erste Gelenkteil 5 in seinem an den Schellenbügel 2 angreifenden Teilbereich Abkröpfungen oder sichtseitige Rücksprünge 20 auf. In der in den Figuren 20 und 21 dargestellten Gebrauchsstellung der Gelenkverbindung wird die mittlere der drei Abkröpfungen oder sichtseitigen Rücksprüngen 20 von dem Querriegel 16 des zweiten Gelenkteils 7 hintergriffen. Zusätzlich oder alternativ können Abkröpfungen oder sichtseitige Rücksprünge 17 des zweiten Gelenkteils in der Gebrauchsstellung der Gelenkverbindung den die Gelenköffnung 5 begrenzenden und zum freien Ende des ersten Gelenkteiles 5 orientierten Randbereich des Schellenbügels 2 hintergreifen. Durch die Abkröpfungen oder sichtseitigen Rücksprünge 17, 20 in Verbindung mit ihren Gegenstücken entstehteine formschlüssige Verbindung dieser Gelenkteile 5, 7, die bei einer Belastung der Rohrschelle eine Zunahme des Formschlusses und somit eine praktisch selbstsichernde Verbindung dieser Gelenkteile 5, 7 bewirkt.

In den Figuren 22 und 23 ist angedeutet, daß an dem Öffnungsrand der Öffnung 5 zumindest eine vorzugsweise zwar Material- oder Sicherungslaschen 9 vorgesehen ist (sind), welche in Gebrauchsstellung des Gelenkes 1 in Richtung zur Gelenköffnung 5 verformbar ist (sind) (vgl. strickpunktierte Linien in Fig. 22).

Um die Schellenhälften 2, 3 an ihren Gelenkteilen 5, 7 unverlierbar miteinander verbinden zu können, hat die Gelenköffnung 5 eine C-förmige Form. Wie insbesondere aus den Figuren 22 und 24 deutlich wird, sind der Querriegel 16 und die Stege 6 des zweiten Gelenkteils 7 zum Einführen an den lichten Querschnitt der Gelenköffnung 5 formangepaßt. Zum Einführen des zweiten, einen etwa geraden Querschnitt aufweisenden, Gelenkteils 7 in das erste Gelenkteil 5 sind die Material- oder Sicherungslaschen 9 zunächst abgewinkelt. Nach dem Einführen werden die Material- oder Sicherungslaschen 9 in Richtung zur Gelenköffnung 5 umgebogen, womit die beiden Gegenstücke unverlierbar miteinander verbunden sind.

Wie aus den Figuren 20, 22 und 24 ersichtlich ist, sind der Öffnungsrand, insbesondere die freien Stege der C-Form der Gelenköffnung 5 einerseits und die Stege 6 des zweiten Gelenkteils 7 andererseits derart formangepaßt, daß die Gelenkteile 5, 7 im wesentlichen ohne seitliches Spiel ineinander geführt sind.

Der Rand der Gelenköffnung 5 kann auch offen sein. Dies soll am Beispiel einer Weiterbildung des Ausführungsbeispiels gemäß den Figuren 20 bis 25 gezeigt werden. Hierzu kann man sich in der Figur 22 einen Teil des Randes 21 teilweise oder ganz weggeschnitten denken, der das Werkstück 2 an seinem Ende begrenzt. Obwohl nun dieser Teil 21 nicht mehr existiert, kann die Gelenkverbindung unverlierbar ausgebildet werden. Beispielsweise können dazu die Material- oder Sicherungslaschen 9 an den seitlichen Fortsätzen 22 befestigt sein, oder die Fortsätze 22 werden allein, d.h. ohne Material- oder Führungslaschen 9, so in Richtung zur Gelenköffnung verformt, daß die Stege 6 des zweiten Gelenkteils formschlüssig im ersten Gelenkteil 5 gehalten werden.

Ähnlich wie in Figur 1 liegen auch die beispielsweise in Figur 21 dargestellten Schellenbügel 2, 3 im Bereich ihrer Gelenkteile 5, 7 überlappend aneinander an. Dadurch wird eine Verletzungs-gefahr in diesem Bereich der Rohrschellen gemäß den Figuren 1 bis 11 sowie den Figuren 20 bis 25 praktisch ausgeschlossen. Dies macht diese Rohrschellen besonders prädestiniert für den Einsatz in Kindergärten, Wohnräumen etc., wo Menschen mit freiliegenden Rohrleitungen und den Rohrschellen in Berührung kommen können. Auch die in den Figuren 20 bis 25 dargestellte Rohrschelle kommt durch ihr äußeres Erscheinungsbild hohen ästhetischen Ansprüchen entgegen. Die in den Figuren 1 bis 11 sowie 20 bis 25 im Bereich ihres Gelenkes 1 dargestellten Rohrschellen haben den Vorzug, daß an den Schellenbügeln 2, 3 ohne weiters eine als Wärme- und/oder Schallschutz dienende Rohrisolation befestigt werden kann, ohne daß im Bereich des Gelenkes 1 Einkerbungen oder dergleichen Einschnitte notwendig wären.

Die mit dem Gelenk 1 erzielbare gelenkige, aber dennoch unverlierbare Verbindung zweier Werkstücke 2, 3 ist hier nur beispielhaft anhand der Rohrschellen 4 beschrieben. Die hier dargestellte Gelenkverbindung läßt sich auch in anderen Bereichen vorteilhaft einsetzen, wo auf einfache Weise zwei Werkstücke 2, 3 über ein Gelenk 1 unverlierbar miteinander verbunden werden müssen.

## Patentansprüche

1. Gelenkverbindung von zwei Werkstücken (2, 3), die jeweils zumindest ein Gelenkteil (5, 7) wenigstens eines Gelenkes (1) aufweisen, wobei ein erstes Werkstück (2) ein als Gelenköffnung (5) ausgebildetes erstes Gelenkteil hat und ein zweites Werkstück (3) ein in das erste Gelenkteil einführbares zweites Gelenkteil (7) aufweist, welche Gelenkteile (5, 7) ineinander einführbar und in Gebrauchsstellung miteinander verhakbar sind, **dadurch gekennzeichnet**, daß die Werkstücke (2, 3) an ihren Gelenkteilen (5, 7) unverlierbar miteinander verbindbar sind, daß dazu das zum Einführen an den lichten Querschnitt der Gelenköffnung (5) formangepaßte zweite Gelenkteil (7) in seiner Gebrauchsstellung in eine im Vergleich zur Gelenköffnung (5) abweichende Querschnittsform verformbar ist und/oder daß der (die) Gelenköffnung begrenzende(n) Rand (Ränder) oder Randteil (Randteile) des ersten Werkstückes in Gebrauchsstellung des zweiten Gelenkteiles (7) derart in Richtung zur Gelenköffnung (5) verformbar ist (sind), daß dieser (diese) das zweite Gelenkteil (7) formschlüssig hintergreifen.

2. Gelenkverbindung nach Anspruch 1, dadurch gekennzeichnet, daß der Rand der Gelenköffnung (5) geschlossen oder offen ist.

3. Gelenkverbindung nach Anspruch 1 oder 2, dadurch gekennzeichnet, daß die über das Gelenk (1) miteinander verbundenen Werkstücke im Bereich ihrer Gelenkteile (5, 7) überlappend aneinander anliegen.

4. Gelenkverbindung nach einem der Ansprüche 1 bis 3, dadurch gekennzeichnet, daß das zweite Gelenkteil (7) einen stegförmigen und in das erste Gelenkteil (5) einführbaren Bereich oder Teilbereich (6) hat.

5. Gelenkverbindung nach einem der Ansprüche 1 bis 4, dadurch gekennzeichnet, daß das zweite Gelenkteil (7) einen, über zumindest eine vorzugsweise stegförmige Querschnittsverengung (6) mit dem zweiten Werkstück (3) verbundenen Querriegel (16) aufweist und bereichsweise mit seiner Querschnittsverengung (6) in das erste Gelenkteil (5) einführbar ist.

6. Gelenkverbindung nach einem der Ansprüche 1 bis 5, dadurch gekennzeichnet, daß das erste Werkstück (2) eine oder mehrere Abkröpfungen oder Rücksprünge (20) aufweist, welcher (welche) in Funktionsstellung der Gelenkverbindung von dem Querriegel (16) des zweiten Gelenkteiles (7) formschlüssig hintergriffen wird (werden).

7. Gelenkverbindung nach einem der Ansprüche 1 bis 6, dadurch gekennzeichnet, daß das zweite Gelenkteil (7) in seinem an das zweite Werkstück angreifenden stegförmigen Teilbereich (6) eine oder mehrere Abkröpfungen oder dergleichen Rücksprünge (17) aufweist, welcher (welche) in Gebrauchsstellung der Gelenkverbindung den die Gelenköffnung begrenzenden und zum freien Ende des ersten Gelenkteiles (5) orientierten Randbereich des ersten Werkstückes formschlüssig hintergreift (hintergreifen).

8. Gelenkverbindung nach einem der Ansprüche 1 bis 7, dadurch gekennzeichnet, daß die Gelenköffnung (5) eine von einer Geraden abweichende Öffnungs-Mittellinie hat.

9. Gelenkverbindung nach einem der Ansprüche 1 bis 8, dadurch gekennzeichnet, daß die Gelenköffnung (5) und der Querriegel (16) des zweiten Gelenkteiles (7) zum Einführen einen formangepaßten und jeweils etwa U- oder V-förmigen Querschnitt aufweisen.

10. Gelenkverbindung nach einem der Ansprüche 1 bis 9, dadurch gekennzeichnet, daß die freien Steg- oder Riegelenden des zum Einführen U- oder V-förmigen Querriegels (16) jeweils nach außen abgewinkelt sind.

11. Gelenkverbindung nach einem der Ansprüche 1 bis 10, dadurch gekennzeichnet, daß der Querriegel (16) zum Sichern des zweiten Gelenkteiles (7) in einen etwa geraden Querschnitt verformbar ist.

12. Gelenkverbindung nach einem der Ansprüche 1 bis 11, dadurch gekennzeichnet, daß die Gelenköffnung (5) einen C-förmigen Querschnitt hat und daß der Querriegel (16) des zweiten Gelenkteils (7) in diese Gelenköffnung (5) einführbar ist.

13. Gelenkverbindung nach einem der Ansprüche 1 bis 12, dadurch gekennzeichnet, daß die Gelenköffnung (5) des ersten Gelenkteiles und das zweite Gelenkteil (7) im Bereich seiner Querschnittsverengung (6) oder seines (seiner) stegförmigen Teilbereiche(s) (6) derart formangepaßt sind, daß die Gelenkteile (5, 7) im wesentlichen ohne seitliches Spiel ineinander geführt sind.

14. Gelenkverbindung nach einem der Ansprüche 1 bis 13, dadurch gekennzeichnet, daß am ersten Werkstück (2) im Bereich der Gelenköffnung (5) zumindest eine Material- oder Sicherungslasche (9) vorgesehen ist, welche zum Sichern des zweiten Gelenkteiles (7) in der Gelenköffnung (5) von einer abgewinkelten Offenstellung in Richtung zur Gelenköffnung in eine Sicherungsstellung verformbar ist.

15. Gelenkverbindung nach einem der Ansprüche 1 bis 14, dadurch gekennzeichnet, daß die Werkstücke als Schellenbügel einer Rohrschelle (4) ausgebildet sind.

16. Gelenkverbindung nach einem der Ansprüche 1 bis 15, dadurch gekennzeichnet, daß die Form der Gelenkteile (5, 7) im Endmontagezustand der Kreisform der Schellenbügel angepaßt ist.

17. Gelenkverbindung nach einem der Ansprüche 1 bis 16, dadurch gekennzeichnet, daß die gelenkseitigen Enden der Werkstücke (2,3 ) in Gebrauchsstellung des Gelenkes (1) auf derselben Seite dieser Werkstücke (2, 3) angordnet sind.

18. Gelenkverbindung nach einem der Ansprüche 1 bis 17, dadurch gekennzeichnet, daß die gelenkseitigen Enden der Werkstücke (2, 3) auf der der Sichtseite abgewandten Seite der Werkstücke (2, 3) angeordnet sind.

19. Gelenkverbindung nach einem der Ansprüche 1 bis 18, dadurch gekennzeichnet, daß die Schellenenden zumindest in ihren gelenkseitigen Endbereich vorzugsweise jeweils beidseits einen radial nach innen abgewinkelten Schellenrand (10, 11) aufweisen.

20. Gelenkverbindung nach einem der Ansprüche 1 bis 19, dadurch gekennzeichnet, daß zwischen der Rohrschelle (4) und einem von ihr umgriffenen Rohr eine insbesondere gummielastische Schelleneinlage (12) vorgesehen ist, welche zumindest eines der beiden Gelenkteile (5, 7) beaufschlagt, und daß die Schelleneinlage (12) vorzugsweise zwischen den nach innen abgewinkelten Schellenrändern (10, 11) der Schellenbügel angeordnet ist.

21. Gelenkverbindung nach einem der Ansprüche 1 bis 20, dadurch gekennzeichnet, daß die Schelleneinlage (12) als Schalldämm- und/oder Wärmedämmeinlage ausgebildet ist.

22. Gelenkverbindung nach einem der Ansprüche 1 bis 21, dadurch gekennzeichnet, daß die gelenkseitigen Enden der Werkstücke (2, 3) auf der Sichtseite der Werkstücke (2, 3) nach außen vorstehen und daß insbesondere die gelenkseitigen Schellenenden einer Rohrschelle (4) radial nach außen vorstehen.

23. Rohrschelle, dadurch gekennzeichnet, daß diese gemäß einem der Ansprüche 1 bis 22 ausgebildet ist.
